# FASCICULE DE BREVET EUROPEEN

(11) **EP 2 692 036 B1**
(45) Date de publication et mention de la délivrance du brevet: **15.07.2015**
(21) Numéro de dépôt: 12720234.9
(22) Date de dépôt: 30.03.2012
(51) Int. Cl.: H02G 13/00

(54) **PROCEDE ET INSTALLATION DE PROTECTION CONTRE LA FOUDRE METTANT EN OEUVRE UN PARATONNERE AVEC DISPOSITIF D'AMORÇAGE COMPORTANT UNE SOURCE DE RAYONNEMENT ELECTROMAGNETIQUE**
VERFAHREN UND ANLAGE FÜR BLITZSCHUTZ MIT EINEM BLITZABLEITER MIT EINER INITIALVORRICHTUNG MIT EINER ELEKTROMAGNETISCHEN STRAHLUNGSQUELLE
METHOD AND INSTALLATION FOR PROTECTING AGAINST LIGHTENING IMPLEMENTING A LIGHTENING ROD WITH PRIMING DEVICE COMPRISING A SOURCE OF ELECTROMAGNETIC RADIATION

(30) Priorité: 31.03.2011 FR 1152727
(43) Date de publication de la demande: 05.02.2014
(73) Titulaire: Indelec, 59500 Douai (FR)
(72) Inventeur: LEFORT, Louis, Arnaud, F-59262 Sainghin en Mélantois (FR)
(74) Mandataire: Matkowska, Franck
(86) Numéro de dépôt international: PCT/FR2012/050683
(87) Numéro de publication internationale: WO 2012/172205

(56) Documents cités:
- EP-A1- 0 320 358
- EP-A1- 2 184 826
- WO-A1-98/01929
- WO-A1-2010/106254
- UCHIDA S ET AL: "Laser-triggered lightning in field experiments", JOURNAL OF OPTICAL TECHNOLOGY, OPTICAL SOCIETY OF AMERICA, WASHINGTON, JP, vol. 66, no. 3, 1 mars 1999 (1999-03-01), pages 199-202, XP002554316, ISSN: 1070-9762

## Description

### Domaine technique

La présente invention concerne le domaine de la protection contre la foudre. Elle a pour objets principaux un procédé et une installation de protection contre la foudre qui mettent en oeuvre un paratonnerre de type PDA (paratonnerre à dispositif d'amorçage) comportant un nouveau type de dispositif d'amorçage.

### Art antérieur

La foudre est un phénomène naturel difficilement prévisible se traduisant par une décharge électrique de haute intensité, pouvant avoir des effets destructeurs importants.

Lorsqu'un nuage d'orage se forme au-dessus d'une zone de l'écorce terrestre, il se charge en accumulant des charges électriques par des phénomènes de convexion et autres phénomènes encore mal connus. Il se produit une ségrégation des charges selon leur signe, leur altitude et la température qui varie de manière importante. La configuration rencontrée à plus de 90% dans les régions à climat tempéré aboutit à une base du nuage d'orage chargée négativement. Des petites « poches » de charges positives peuvent également être confinées à la base du nuage. Le sol au dessous du nuage d'orage se polarise localement positivement par effet de miroir au dessous de la base du nuage d'orage.

Ainsi, entre le sol et la base du nuage d'orage se forme un champ électrique dit « champ d'orage ».

Par beau temps, on peut mesurer à la surface de l'écorce terrestre et sur terrain plat un champ électrique dit « de beau temps », typiquement de l'ordre de 100 V/m à 150 V/m, dû à des charges positives situées à des altitudes de l'ordre de 50km. Lors du développement d'un processus orageux, le champ électrique « d'orage » qui se forme entre la base du nuage et le sol, présente une polarité inverse au champ électrique de beau temps et peut atteindre typiquement des valeurs moyennes de -15 kV/m à - 20 kV/m.

L'air forme un très bon isolant électrique. Ainsi, malgré cette énorme différence de potentiel entre la base du nuage d'orage et le sol, une décharge électrique correspondant à la formation de la foudre ne peut se produire. Une très forte augmentation du champ électrique local favorise le déclenchement de cette décharge électrique.

Il est par ailleurs connu que la moindre aspérité sur le sol agit comme un concentrateur des lignes équipotentielles de champ électrique et augmente localement le champ électrique. Cette augmentation locale du champ électrique est appelé « effet de pointe ». Chaque aspérité, selon sa hauteur et son degré d'effilement, sera caractérisée par son propre coefficient d'amplification du champ par effet de pointe.

Grâce à cette amplification locale du champ électrique par effet de pointe sur le sommet d'une aspérité, on peut observer une ionisation locale de l'air au voisinage du sommet d'une aspérité, si le champ électrique est supérieur, en valeur absolue, typiquement à 26 kV/cm. Chaque électron arraché par ionisation de l'air est fortement accéléré parle champ électrique local. Lorsque l'énergie de l'électron est suffisante, il peut, en entrant en collision avec un atome, arracher un autre électron, et ainsi de suite, accélérant l'ionisation de l'air au voisinage de l'aspérité par un phénomène dit « d'avalanche électronique».

En pratique, ce phénomène d'avalanche électronique se produit si le champ électrique atteint localement au moins environ 30 kV/cm. Cette ionisation de l'air par un phénomène d'avalanche électronique provoque un effet dit « couronne », encore appelé effet « *Corona* », qui peut être précurseur de l'éclair, et qui se traduit par l'émission au voisinage d'une aspérité de l'émission d'une lumière couronne. En pratique, cette effet couronne est observé au sommet des points les plus élevés (pylônes, bâtiments, arbres...).

Toutefois, l'augmentation locale du champ électrique par effet de pointe décroit très rapidement dans l'espace. Si le champ électrique ambiant n'est pas suffisant, cette ionisation (effet couronne) ne peut pas se propager et reste confinée autour de l'aspérité.

Le plus souvent, la formation de la foudre commence par une ou plusieurs décharges électriques descendant du nuage d'orage. Ces décharges électriques sont appelées communément traceurs descendants, ou encore « downward stepped leaders ». Un traceur descendant, lorsqu'il approche du sol, provoque une brusque augmentation du champ électrique global et donc du champ électrique local au niveau de chaque aspérité. Cette brusque augmentation du champ électrique combinée à l'effet de pointe provoque l'intensifcation de l'effet couronne sur les aspérités du sol les plus hautes et les plus effilées. Plus le traceur descendant s'approche du sol, et plus le champ électrique global et le champ électrique local au sommet d'une aspérité augmentent. L'effet couronne au voisinage immédiat d'une aspérité augmente alors fortement pour passer en mode pulsé et l'ionisation de l'air au voisinage immédiat de l'aspérité tend à se propager vers le haut sous la forme d'un « streamer ». Toutefois, plus on s'éloigne de l'aspérité, plus le coefficient d'amplification de l'effet de pointe diminue. A partir d'une certaine distance, les conditions de champ ne sont plus suffisantes pour porter cette ionisation (« streamer ») vers le haut. Cette limite est estimée à environ 5kV/cm. Il y a alors recombinaison des charges, l'effet couronne restant confiné au voisinage de l'aspérité, et le cycle recommence. Cependant pendant ce temps là, le champ électrique global continue à augmenter, le traceur descendant se rapprochant toujours du sol.

Au cours de l'un des cycles, un « streamer » va trouver les bonnes conditions de champ pour se propager librement vers le haut sous la forme. d'un traceur ascendant allant à la rencontre du traceur descendant.

Lorsque qu'un traceur ascendant rencontre un traceur descendant, un canal conducteur est établi. Ce canal conducteur permet au nuage d'orage de se décharger vers le sol en évacuant ses charges (coup de foudre) par l'arc en retour (« retum stroke ») et les arcs subséquents. Une fois le nuage d'orage déchargé, son potentiel se réduit fortement, et le nuage d'orage se recharge pour le prochain coup de foudre.

Cette décharge électrique rapide de haute intensité peut être forcement destructrice, en particulier pour les installations industrielles ou domestiques. Afin de protéger une zone ou une installation au sol contre la foudre, il est usuel d'installer en hauteur au moins un paratonnerre, par exemple sur le toit d'un bâtiment à protéger, dans le but de capter la foudre et d'évacuer à la terre la décharge électrique impulsionnelle de haute intensité raccompagnant la foudre. Un paratonnerre comporte typiquement, dans sa version la plus simple, au moins une électrode collectrice, sous la forme le plus souvent d'une tige métallique, placée en hauteur. Cette électrode métallique collectrice comporte une extrémité libre qui peut-être très effilée en forme de pointe ou qui peut être arrondie, et est reliée électriquement à la terre, par un câble électriquement conducteur du équivalent. Cette électrode collectrice a pour fonction de favoriser, par effet de pointe, la formation de traceurs ascendants à l'approche de traceurs descendants, de manière à augmenter la probabilité qu'un traceur descendant du nuage d'orage établisse un contact avec un traceur ascendant produit par l'électrode collectrice, plutôt qu'avec un traceur ascendant produit par une toute autre aspérité de manière non maîtrisée.

Depuis longtemps, dans le but d'améliorer l'efficacité des paratonnerres, on a proposé d'associer à l'électrode collectrice inerte d'un paratonnerre des moyens d'amorçage actifs ou passifs permettant de déclencher plus rapidement l'effet couronne et d'accélérer la formation d'un traceur ascendant. Ces moyens d'amorçage agissent en provoquant une ionisation additionnelle de l'air au voisinage de l'extrémité libre de l'électrode collectrice et consistent par exemple en des décharges haute tension. Ces paratonnerres perfectionnés sont communément désignés PDA (Paratonnerre à dispositif d'amorçage). Des exemples de PDA sont décrits notamment dans les demandes de brevet français FR 2 590 737 et FR 907037, et FR 1 478 526.

Les dispositifs d'amorçage connus, entre autres du type à décharges haute tension, ne sont pas directifs et ne permettent pas de ioniser l'air dans un volume cible précis. En outre, ils implosent une synchronisation précise du déclenchement par rapport à l'évolution du champ électrique afin de ne pas déclencher trop prématurément ou trop tardivement l'ionisation additionnelle. Des systèmes de déclenchement automatique du dispositif d'amorçage ont donc été développés. La demande de brevet français précitée FR 2 590737 divulgue par exemple un système de déclenchement automatique basé sur une détection de la variation du champ électrique. La demande de brevet français FR 2 943 487 divulgue par exemple un système de déclenchement automatique basé sur une détection optique de l'effet couronne.

On a par ailleurs déjà proposé d'améliorer le fonctionnement d'un paratonnerre en formant un canal ionisant pour faciliter la formation d'un traceur ascendant et pour guider le traceur ascendant jusqu'au traceur descendant, au moyen d'un ou plusieurs faisceaux lasers de très forte puissance. On peut se référer sur ce sujet à la demande de brevet français FR 2 750 806, à la demande de brevet européen EP 2 184 826, aux brevets américains US 4 017 767, US 5 175 664, US 5 726 855, US 6 072 684 et à la demande de brevet international WO 98/01929.

L'utilisation de lasers pulsés de très forte puissance pour la formation d'un traceur ascendant et son guidage au moyen d'un canal ionisant a fait l'objet également de nombreuses études en laboratoire. Dans ce type de solution, on est contraint d'utiliser des lasers pulsés de très haute intensité, typiquement supérieure au GW/cm² et pouvant dans certains cas aller jusqu'à 10TW/cm², afin d'une part d'apporter aux molécules contenues dans l'air suffisamment d'énergie pour obtenir directement une ionisation de l'air, et d'autre part afin de former un canal de guidage ionisant suffisamment étendu. On utilise généralement des lasers pulsés, ayant des impulsions ultracourtes de l'ordre de quelques femto secondes.

Ces lasers pulsés de très haute intensité sont extrêmement onéreux à fabriquer, de sorte qu'à la connaissance de la demanderesse cette solution est dans la plupart des cas restée à ce jour au stade de l'étude à petite échelle en laboratoire ou dans le meilleur des cas au stade de prototype à échelle réelle. L'utilisation d'un laser dans un paratonnerre pour déclencher l'effet couronne et former un canal de guidage ionisant permettant de guider le traceur ascendant peut paraître séduisante en théorie, mais s'avère en pratique à ce jour inexploitable commercialement.

### Objectif de l'invention

Un objectif de l'invention est de proposer une nouvelle solution technique d'amorçage de la décharge de la foudre dans un paratonnerre. Cette nouvelle solution permet une ionisation efficace de l'air, et est moins contraignante, notamment en termes de synchronisation, que les solutions actuelles basées sur la mise en oeuvre de décharges haute tension. Cette nouvelle solution est également nettement moins onéreuse à fabriquer que les solutions de l'art antérieur basées sur l'utilisation de lasers pulsés de très haute intensité.

### Résumé de l'invention

L'invention a ainsi pour premier objet un procédé de protection contre la foudre au moyen d'un paratonnerre comportant une électrode collectrice, qui comprend une extrémité libre permettant de créer un effet de pointe.

De manière caractéristique selon l'invention, on émet au moins un rayonnement électromagnétique qui est focalisé dans un plan de focalisation sur ladite extrémité libre de l'électrode collectrice ou à proximité immédiate de ladite extrémité libre de l'électrode collectrice, et
(i) la distance (d) entre l'extrémité libre de l'électrode et le centre (O) du rayonnement électromagnétique (F) dans le plan de focalisation n'excède pas 10cm, et/ou
(ii) l'intensité (I) du rayonnement électromagnétique dans le plan de focalisation est inférieure à 1000W/cm².

De préférence, mais non nécessairement le rayonnement électromagnétique est un rayonnement « lumineux » de longueur d'onde comprise entre 80nm et 900nm, et plus préférentiellement encore entre 80nm et 450nm.

Dans l'invention, la focalisation du rayonnement électromagnétique sur ou à proximité immédiate de l'extrémité libre de l'électrode collectrice permet avantageusement, et de manière nouvelle, de combiner l'apport d'énergie par le rayonnent électromagnétique et l'effet de pointe (amplification du champ électrique local à l'extrémité libre l'électrode) de manière à obtenir une ionisation de l'air au voisinage immédiat de l'extrémité libre de l'électrode. Ainsi à la différence des solutions précitées de l'art antérieur utilisant un laser pulsé de très haute intensité pour créer un canal de guidage ionisé, le rayonnement électromagnétique de l'invention peut avantageusement présenter une très faible intensité.

De manière avantageuse selon l'invention, le rayonnement électromagnétique peut dans une variante simplifiée de mise en oeuvre être émis constamment, sans qu'il ne soit nécessaire de synchroniser de manière précise son déclenchement. Dans une variante de réalisation plus sophistiquée, et dans un souci principalement d'économie d'énergie, l'émission du rayonnement électromagnétique peut toutefois être déclenchée automatiquement, par exemple à partir d'une mesure du champ électrique ou de la variation du champ électrique et/ou à partir d'une détection optique de l'effet couronne.

L'invention a également pour objet une installation de protection contre la foudre. De manière connue, cette installation comporte un paratonnerre et un dispositif d'amorçage, le paratonnerre comprenant une électrode collectrice qui comprend une extrémité libre permettant de créer un effet de pointe.

De manière caractéristique selon l'invention ledit dispositif d'amorçage comporte une source de rayonnement électromagnétique et des moyens de focalisation permettant de focaliser le rayonnement électromagnétique émis par la source sur ladite extrémité libre de l'électrode ou à proximité immédiate de ladite extrémité libre de l'électrode collectrice.

L'invention a également pour objet l'utilisation de l'installation précitée pour protéger une zone contre les impacts de foudre.

### Brève description des dessins

D'autres caractéristiques et avantages de l'invention apparaîtront plus clairement à la lecture de la description détaillée ci-après de plusieurs variantes de réalisation de l'invention, lesquelles variantes sont décrites à titre d'exemples non limitatifs et non exhaustifs de l'invention et en référence aux dessins annexés sur lesquels:
- la figure 1 représente de manière schématique une première variante de réalisation d'une installation de l'invention,
- la figure 2 représente de manière schématique une deuxième variante de réalisation d'une installation de l'invention,
- la figure 3 est un agrandissement de l'installation de la figure 1 dans la région de focalisation du laser,
- la figure 4 est un agrandissement de l'installation de la figure 2 dans la région de focalisation du laser,
- la figure 5 est un schéma montrant une électrode en forme de pointe et les effets de concentration des lignes équipotentielles de champs associés à « l'effet de pointe », ainsi que la décroissance du facteur d'amplification k de l'effet de pointe en fonction de la distance par rapport à l'apex de la pointe,
- la figure 6 est représente au cours d'un phénomène de décharge (coup de foudre) l'évolution dans le temps (courbe A) du champ électrique local au voisinage de l'électrode et l'évolution dans le temps (courbe B) de l'intensité du courant dans l'électrode collectrice.

### Description détaillée

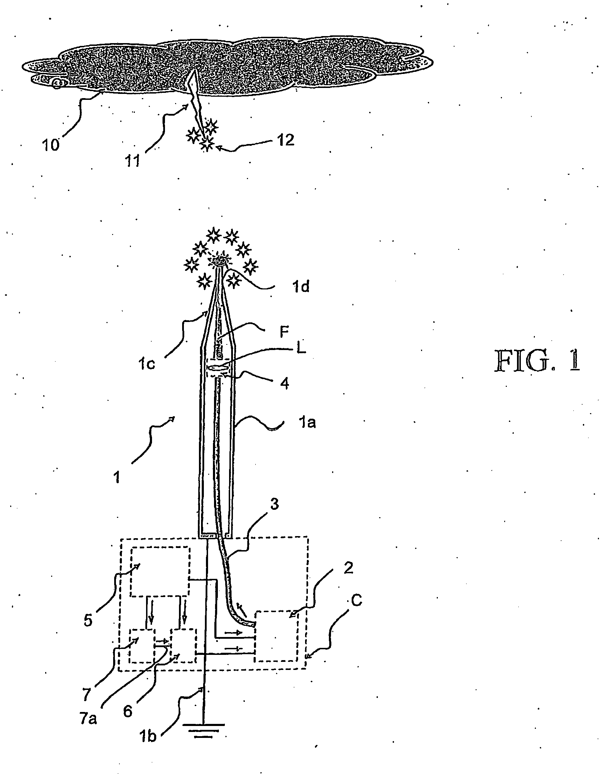

En référence à la figure 1, dans une première variante particulière de réalisation, l'installation pour la protection contre les impacts de foudre comprend un paratonnerre comportant une électrode collectrice. 1 et un dispositif d'amorçage comprenant une source laser 2, une fibre optique 3 raccordée à la sortie de la source laser 2, et des moyens optiques de focalisation 4 permettant une focalisation du faisceau laser en sortie de la fibre optique 3.

Dans cet exemple particulier, l'électrode collectrice 1 comporte une tige creuse métallique 1 a, reliée à la terre par une liaison 1b électriquement conductrice. La tige 1 comporte une partie haute 1c effilée qui se termine par une extrémité libre 1d de faible section transversale et permettant de créer un effet de pointe. La partie distale effilée 1 c de la tige présente une section transversale décroissante jusque son extrémité libre 1d. Cette extrémité libre 1d constitue l'apex de la partie haute effilée 1c de la tige 1a. La géométrie de la section transversale de la tige 1 a est indifférente pour l'invention, et peut être circulaire, quadrangulaire, etc...

La tige 1a de l'électrode 1 est de préférence installée en hauteur, par exemple en étant fixée sur le toit d'un bâtiment à protéger ou en étant portée par un mât.

La source laser 2 et une partie de la fibre optique 3 sont logés à l'intérieur d'un corps de protection C de manière être protégés notamment contre les agressions extérieures, les chocs mécaniques et contre les effets des rayonnements électromagnétiques.

L'autre partie de la fibre optique 3 et les moyens optiques de focalisation 4 sont logés à l'intérieur de la tige creuse 1 a.

Au niveau de son extrémité libre 1d, la tige 1a de l'électrode 1 est ouverte de manière à permettre le passage du faisceau laser F après focalisation par les moyens optiques de focalisation 4.

Le dispositif d'amorçage comporte en outre une source d'alimentation électrique 5, un circuit de commande 6 de la source laser 2, et un circuit de détection 7. Tous ces éléments sont logés dans le corps de protection C. De manière connue en soi, le circuit de détection 7 est relié à au moins un capteur (non représenté) permettant par exemple une détection du champ électrique ambiant ou de la variation du champ électrique ambiant et/ou à un capteur permettant une détection optique de l'effet couronne.

La source d'alimentation électrique 5 permet d'alimenter électriquement la source laser 2, le circuit de commande 6, et le circuit de détection 7.

Dans cette variante de réalisation sophistiquée, la mise en marche est l'arrêt de la source laser 2 sont commandés automatiquement par le circuit de commande 6 à partir du signal de détection 7a délivré par le circuit de détection 7.

Dans une variante de réalisation simplifiée, la mise en marche et l'arrêt de la source peuvent être réalisés de manière manuelle par un opérateur, le dispositif d'amorçage ne comportant pas nécessairement dans ce cas un circuit de commande 6 et un circuit de détection 7.

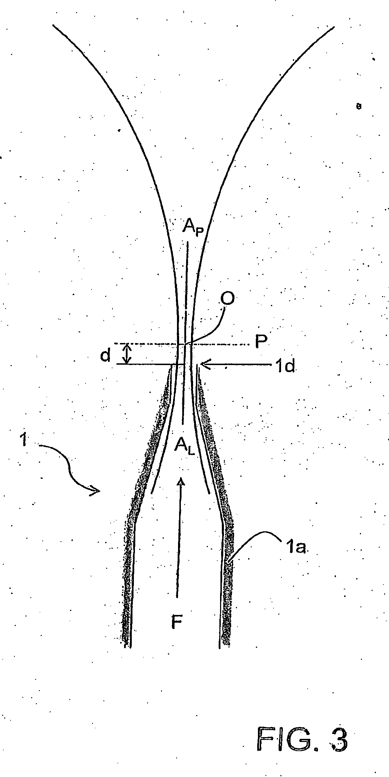

Les moyens optiques de focalisation 4 peuvent être constitués par tout moyen connu permettant de réaliser une focalisation optique du faisceau délivré par la source laser 2 dans un plan de focalisation P (figure 3). Les moyens optiques de focalisation 4 peuvent par exemple comporter une lentille optique L, un système de plusieurs lentilles alignées ou tout autre moyen de focalisation du rayonnement électromagnétique.

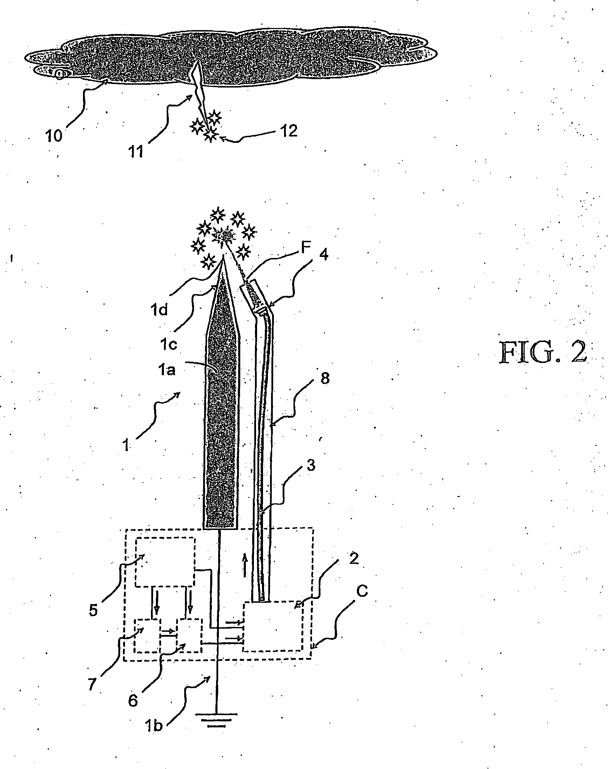

En référence à la figure 2, on désigne dans le présent texte par « plan de focalisation », le plan P dans lequel la section transversale du faisceau focalisé F est minimale, c'est-à-dire dans le cas d'un faisceau laser de type gaussien, le plan P dans lequel le « waist » (« rayon de ceinture ») du faisceau laser focalisé F est minimum. Dans ce plan de focalisation P, l'énergie du faisceau est maximale.

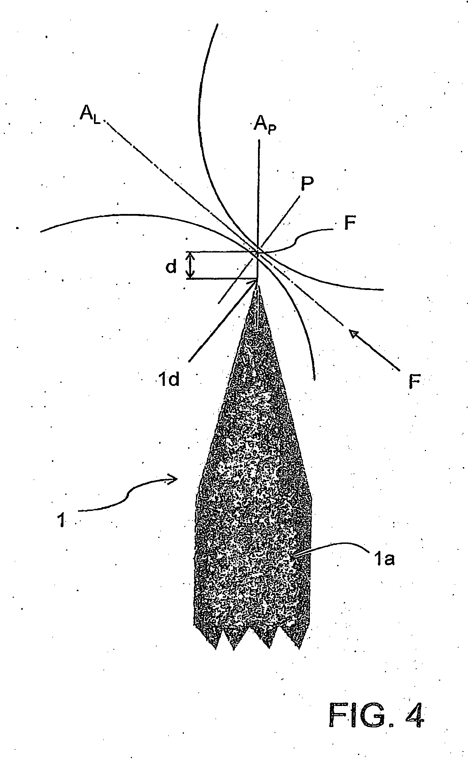

Conformément à une caractéristique importante de l'invention, les moyens optiques de focalisation 4 permettent de focaliser le faisceau laser dans un plan de focalisation P de telle sorte que le spot laser dans ce plan de focalisation P est situé à proximité immédiate (figure 3 ou 4 ; distance d non nulle) de ladite extrémité libre 1d de l'électrode collectrice 1 ou coupe ladite l'extrémité libre 1d (figure 3 ou 4; distance d = 0; focalisation du faisceau laser sur l'extrémité libre 1 d de l'électrode 1). Sur les figure 3 et 4, l'axe de propagation du faisceau laser focalisé F est référencé A_{L} ; l'axe longitudinal central vertical de la tige 1 a de l'électrode 1 est référencé A_{P} ; la distance d est la distance entre l'extrémité libre 1d de l'électrode 1 et le centre O du rayonnement électromagnétique focalisé F dans le plan de focalisation P.

On a représenté sur la figure 2, une autre variante de réalisation, qui se différencie de celle de la figure 1 principalement par le fait que :
- la tige métallique 1a de l'électrode 1 est pleine et présente une partie haute 1 c en forme de pointe,
- la fibre optique 3 et les moyens optiques de focalisation 4 ne sont pas logés dans la tige 1a, mais sont logés et supportés à l'intérieur d'un support 8 additionnel qui est creux et isolé électriquement.

En référence à la figure 1 ou à la figure 2, lorsqu'un nuage d'orage 10 se forme, un ou plusieurs traceurs descendants 11 qui portent des charges électriques 12 se forment, et le champ électrique global entre l'extrémité inférieure du traceur descendant 11 et l'extrémité libre 1d de la tige 1 a augmente. Plus le traceur descendant se rapproche du sol et plus le champ électrique global augmente.

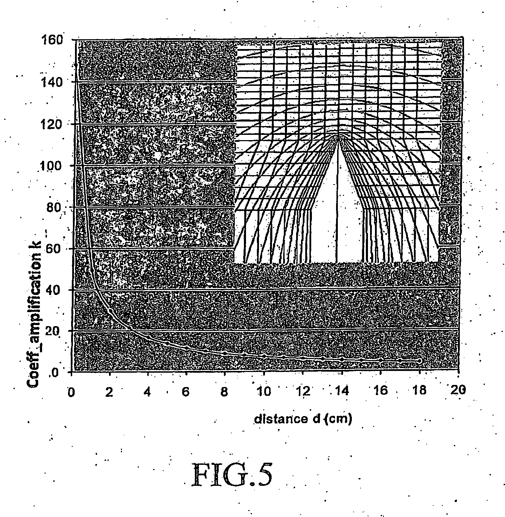

Dans l'espace nuage/sol, des lignes de champ électrique (verticales) et des lignes d'équipotentielles (horizontales) vont se répartir, tous les objets au sol étant au potentiel du sol. Ces lignes équipotentielles suivent les reliefs du sol. Au sommet des aspérités, et par conséquent à l'extrémité libre 1d de la tige 1a (figure 5), on observe une ooncentration de ces lignes équipotentielles qui produit une augmentation du champ, communément appelée « effet de pointe ». Cet effet de pointe à l'extrémité libre 1d de la tige 1a est caractérisé par un coefficient d'amplification k. Si le champ électrique ambiant global d'orage vaut *E*₀, le champ électrique local à l'extrémité libre 1d de la tige 1 vaut E = E₀ x *k*.

De manière connue, le coefficient d'amplification k de l'effet de pointe de la tige 1 a dépendra de la forme effilée de la tige 1a. En particulier, le coefficient d'amplification k dépend du rayon de courbure de l'extrémité libre 1d de la tige. Ainsi de manière connue, plus le rayon de courbure de l'extrémité libre 1d de la tige 1a est faible et plus le coefficient d'amplification k est important. Ainsi, dans le cas d'une tige 1a telle que celle de la figure 1 ou figure 2, ce coefficient d'amplification k est très important et peut être supérieur à 100.

De préférence, le rayon de courbure de l'extrémité libre 1d de l'électrode 1 sera inférieur à un rayon de courbure critique valant 30cm.

En référence à la figure 5, on notera également que plus on s'éloigne de l'extrémité libre 1d de la tige 1a (distance d), plus le coefficient d'amplification k décroît rapidement.

Grâce à cette augmentation locale du champ électrique (« effet de pointe »), on observe l'apparition d'un "effet couronne" (ionisation de l'air) à l'extrémité libre 1d de la tige 1a.

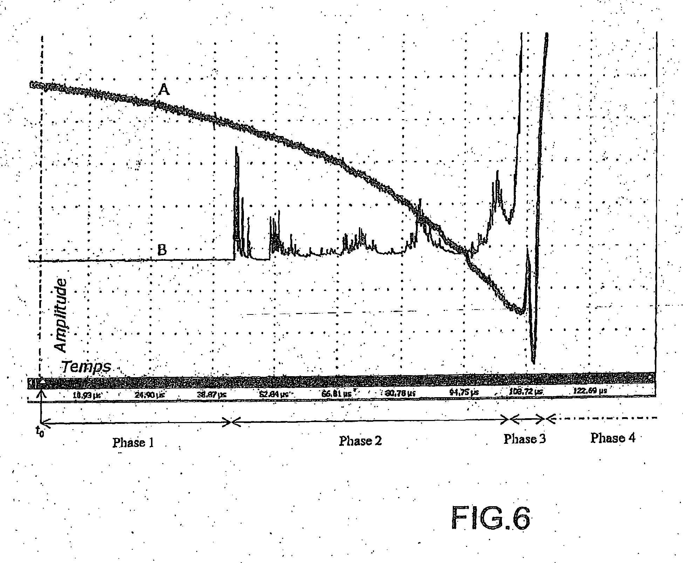

En référence à la figure 6, l'effet couronne est le phénomène précurseur à la création du traceur ascendant et se développe en plusieurs phases.
t₀ : un traceur descendant 11 (figure 1 ou figure 2) se forme à partir du nuage d'orage 10, ce qui provoque une brusque augmentation (en valeur absolue) du champ électrique local au niveau de l'électrode 1 (courbe A)
Phase 1 : Une molécule neutre contenue dans l'air environnant l'extrémité libre 1d de l'électrode 1 est ionisée par un événement extérieur (par exemple par interaction avec un photon) et un ion positif et un électron sont libérés. Ces deux particules étant de charge inverses, le champ électrique crée sur chacune d'elles une force électrique égale en norme mais de sens opposé et les sépare, empêchant leur recombinaison et leur apportant une énergie cinétique importante. Lorsque le champ électrique est suffisant (typiquement *E* > 30kV/cm), l'électron étant de masse beaucoup plus faible que l'ion, il est fortement accéléré par le champ électrique, et entre en collision avec des atomes neutres, ce qui tend à créer de nouvelles paires électrons/ions positifs, qui suivront le même processus. On parle d'effet d'avalanche. La production d'ions positifs, se déplaçant dans le sens du champ, va produire un "matelas" de charges positives, ce qui a pour effet de diminuer le champ au voisinage de la pointe et d'arrêter temporairement l'ionisation. Si le champ électrique ambiant n'est pas suffisant, cette ionisation (effet couronne) ne peut pas se propager et reste confinée autour de l'extrémité libre 1d de l'électrode 1. Pendant ce temps le traceur descendant 11 poursuit sa descente et le champ électrique continue d'augmenter.
Phase 2 : Lorsque le champ électrique local au voisinage immédiat de l'extrémité libre 1d de l'électrode 1 atteint un seuil suffisant, l'effet couronne au voisinage immédiat de l'extrémité libre 1d de l'électrode 1 augmente alors fortement pour passer en mode pulsé et l'ionisation de l'air au voisinage immédiat de l'extrémité libre 1d de l'électrode 1 tend à se propager vers le haut sous la forme d'un «streamer». Toutefois, plus on s'éloigne de l'extrémité libre 1d de l'électrode 1, plus le coefficient d'amplification k de l'effet de pointe diminue. A partir d'une certaine distance, les conditions de champ ne sont plus suffisantes pour porter cette ionisation («streamer») vers le haut. Cette limite est estimée à environ 5kV/cm. Il y a alors recombinaison des charges, l'effet couronne restant confiné au voisinage de l'extrémité libre 1d de l'électrode 1 et le cycle recommence. Cependant pendant ce temps là, le champ électrique global continue à augmenter, le traceur descendant 11 se rapprochant toujours du sol.
Phase 3 : Au cours de l'un des cycles, un « streamer » va trouver les bonnes conditions de champ pour se propager librement vers le haut sous la forme d'un traceur (« leader ») ascendant qui va aller à la rencontre du traceur descendant. Lorsque que ce traceur ascendant rencontre un traceur descendant, un canal conducteur est établi. Ce canal conducteur permet au nuage d'orage de se décharger vers le sol en évacuant ses charges à la terre par l'arc en retour (« return stroke ») via l'électrode 1 du paratonnerre, ce qui se traduit par une très brusque augmentation de l'intensité du courant dans l'électrode collectrice 1 (courbe B).
Phase 4 : Une fois le nuage d'orage déchargé, le champ électrique (courbe A) diminue brusquement, puis le nuage d'orage se recharge pour le prochain coup de foudre.

Lorsque le dispositif d'amorçage de l'invention est actif, la source lasser 2 émet un faisceau laser qui est focalisé par les moyens optiques de focalisation 4 sous la forme d'un faisceau F focalisé sur ou au voisinage immédiat (plan de focalisation P) de l'extrémité libre 1d de l'électrode 1. Dans le plan de focalisation P, l'intensité du faisceau laser focalisé F est maximale: Grâce à la combinaison de l'apport d'énergie par le faisceau laser focalisé F et de l'effet de pointe (amplification du champ électrique local) à l'extrémité libre 1d l'électrode 1, on favorise l'ionisation de l'air au voisinage immédiat de l'extrémité libre 1d de l'électrode 1, ce qui permet avantageusement d'accélérer la formation dans le temps d'un traceur ascendant, comparativement à la même installation contre la foudre sans mise en oeuvre du laser d'amorçage.

Dans le cadre d'une variante simplifiée de réalisation de l'invention, la source laser 2 peut émettre continuellement le faisceau laser focalisé F, indépendamment de toute synchronisation par rapport aux phases 1 à 4 précitées. Dans une variante de réalisation plus sophistiquée, le circuit de détection 7 et le circuit de commande 6 sont conçus pour mettre en marche automatiquement la source laser 2, au cours de la phase 1, et pour arrêter automatiquement la source laser lorsque l'orage est terminé.

Grâce aux effets combinés de l'effet de pointe et de l'apport d'énergie par le faisceau laser focalisé F, le laser peut avantageusement avoir une intensité faible, et il n'est pas nécessaire dans le cadre de l'invention de mettre en oeuvre un laser pulsé de très forte intensité.

L'énergie apportée par le faisceau laser focalisé F peut d'ailleurs, le cas échéant, être plus faible que l'énergie normalement requise pour obtenir une ionisation complète de l'air à l'aide du seul rayonnement électromagnétique. Ceci pourrait s'expliquer par le fait que l'effet de concentration des lignes équipotentielles de champ électrique inhérent à l'effet de pointe rapprocherait par effet Stark les niveaux d'énergies des atomes des molécules d'azote et des molécules d'oxygène, lesquels atomes de ce fait nécessiteraient des photons moins énergétiques pour s'ioniser en libérant un électron. La demanderesse n'est toutefois pas liée par cette explication faite a posteriori.

De préférence, mais non nécessairement, le laser peut ainsi avantageusement être un laser continu de faible intensité. L'utilisation d'un laser pulsé peut néanmoins également être envisagée dans le cadre de l'invention.

Pour une intensité donnée du laser, l'apport d'énergie dépend de la longueur d'onde du faisceau laser. En théorie, compte tenu du potentiel d'ionisation très élevé de l'azote, une longueur d'onde optimale correspondrait au domaine dit « VUV » (vacuum ultra-violet). Cependant, à ce jour il n'existe pas de laser ponctionnant dans cette gamme de longueurs d'ondes. Par conséquent, pour la mise en oeuvre de l'invention on utilise de préférence à ce jour un laser dans la gamme de longueurs d'ondes des UV, soit entre environ 80nm et environ 450 nm.

L'invention n'est toutefois pas limitée à la mise en oeuvre d'une source laser 2 ayant une longueur d'onde dans cette gamme particulière de longueurs d'onde. Il est possible d'utiliser d'autres longueurs d'onde pour le laser, mais dans ce cas l'intensité du laser devra être plus importante.

L'invention n'est pas non plus limitée à la mise en oeuvre d'une source laser 2, mais s'étend plus généralement à la mise en oeuvre d'une source 2 apte à émettre un rayonnement électromagnétique, de préférence dans la gamme de longueurs d'onde entre 80nm et 900nm.

Dans un exemple particulier de réalisation donné uniquement à titre indicatif, la source laser 2 et les moyens optiques de focalisation 4 étaient conçus pour émettre un faisceau laser continu focalisé F, ayant une longueur d'onde de 405nm, de puissance PU valant environ 200mW, avec un diamètre D du faisceau laser focalisé F dans le plan de focalisation P valant 2mm.. L'intensité I du laser dans le plan de focalisation P (I = 4PU/πD²) valait environ 6,4W/cm². L'énergie totale U apportée par le laser pendant une durée t d'environ 100µs [durée de la décharge (phase 1 à 3) lors du coup de foudre] valait environ 2.10⁻⁵ J (U= PU.t). La distance d entre le plan de focalisation P et l'extrémité libre 1d de l'électrode 1 était inférieure à 0,5cm.

L'invention n'est pas limitée au laser continu présentant les caractéristiques particulières ci-dessus.

Dans le cadre de l'invention, la source laser 2 peut également être un laser pulsé. Dans la cas d'un laser pulsé, l'intensité I du laser dans le plan de focalisation P est l'intensité par impulsion et peut de manière usuelle être calculée par la formule suivante : I = U/Atᵢ, dans laquelle U est l'énergie totale (en Joules) par impulsion, À est la surface du faisceau laser dans le plan de focalisation P (A= πD²/4 dans le cas d'un faisceau de section transversale circulaire), et tᵢ est la durée d'une impulsion.

Plus généralement, grâce à la combinaison de l'effet de pointe et de l'apport d'énergie par le faisceau laser focalisé F, le faisceau laser focalisé F peut avantageusement avoir une intensité faible, typiquement une intensité mesurée dans le plan de focalisation P inférieure à 1000W/cm², de préférence inférieure à 100W/cm², et plus préférentiellement encore inférieure à 10W/cm².

Tel que précédemment expliqué, le coefficient k de l'effet de pointe diminue très rapidement, lorsqu'on s'éloigne de l'extrémité libre 1d de l'électrode 1 (figure 5). Par conséquent, afin de pouvoir bénéficier de cet effet de pointe, il convient dans le cadre de l'invention de focaliser le rayonnement électromagnétique au plus près de l'extrémité libre 1d de l'électrode 1.

De préférence, afin de bénéficier de l'effet de pointe, la focalisation du faisceau laser F (ou plus généralement du rayonnement électromagnétique) est effectuée de telle sorte que la distance d (figure 3 et figure 4) qui sépare l'extrémité libre 1d de l'électrode 1 et le centre O du spot du faisceau laser focalisé F dans son plan de focalisation P n'excède pas 10cm. De préférence cette distance d sera inférieure à 4 cm, et plus préférentiellement encore inférieure à 2 cm et encore plus préférentiellement inférieure à 0,5cm. Cette distance d peut être nulle (focalisation sur l'extrémité libre 1 d l'électrode 1).

On notera que sur les figures 3 et 4, le plan de focalisation P est H positionné à proximité immédiate de l'extrémité libre 1d l'électrode 1, et à l'extérieur de l'électrode. Dans une autre variante, la focalisation du faisceau laser F (ou plus généralement du rayonnement électromagnétique) peut être effectuée de telle sorte que le plan de focalisation P est positionné à proximité immédiate de l'extrémité libre 1d l'électrode 1, mais à l'intérieur de l'électrode 1 lorsque celle-ci est creuse comme dans la variante de la figure 1.

L'invention n'est pas limitée aux exemples d'électrode 1 des figures annexées mais peut être mise en oeuvre avec tout type d'électrode collectrice de paratonnerre connues et comportant une extrémité libre qui permet d'obtenir un effet de pointe, c'est-à-dire une amplification locale du champ électrique. En particulier, l'extrémité libre de l'électrode peut dans une autre variante être de forme sphérique. Egalement une électrode collectrice peut comporter plusieurs tiges comportant chacune une extrémité libre permettant d'obtenir un effet de pointe.

Dans une autre variante de réalisation, l'invention peut également comporter plusieurs source de rayonnement électromagnétiques de longueurs d'ondes différentes.

## Revendications

1. Procédé de protection contre la foudre au moyen d'un paratonnerre comportant une électrode collectrice (1), qui comprend une extrémité libre (1d) permettant de créer un effet de pointe, dans lequel on émet au moins un rayonnement électromagnétique (F) qui est focalisé dans un plan de focalisation (P) sur ladite extrémité libre (1d) de l'électrode collectrice (1) ou à proximité immédiate de ladite extrémité libre (1d) de l'électrode collectrice (1), **caractérisé en ce que** la distance (d) entre l'extrémité libre (1d) de l'électrode et le centre (O) du rayonnement électromagnétique (F) dans le plan de focalisation (P) n'excède pas 10cm, et/ou l'intensité (I) du rayonnement électromagnétique dans le plan de focalisation (P) est inférieure à 1000W/cm².

2. Procédé selon la revendication 1, dans lequel le rayonnement électromagnétique est un faisceau laser continu.

3. Procédé selon la revendication 1, dans lequel le rayonnement électromagnétique est un faisceau laser pulsé.

4. Procédé selon l'une quelconque des revendications 1 à 3, dans lequel le rayonnement électromagnétique présente une longueur d'onde comprise entre 80nm et 900nm.

5. Procédé selon la revendication 4, dans lequel le rayonnement électromagnétique présente une longueur d'onde comprise entre 80nm et 450nm.

6. Procédé selon l'une quelconque des revendications 1 à 5, dans lequel la distance (d) entre l'extrémité libre (1d) de l'électrode et le plan de focalisation (P) dans lequel est focalisé le rayonnement électromagnétique (F) est inférieure à 4cm, de préférence inférieure à 2cm, et plus préférentiellement encore inférieure à 0,5cm.

7. Procédé selon l'une quelconque des revendications 1 à 6, dans lequel l'électrode collectrice (1) comporte une partie distale (1c) effilée dont la section transversale décroît jusque l'extrémité libre (1d).

8. Procédé selon l'une quelconque des revendications 1 à 7, dans lequel le rayon de courbure de l'électrode (1) au niveau de son extrémité libre (1d) est inférieur à 30cm.

9. Procédé selon l'une quelconque des revendications 1 à 8, dans lequel l'électrode (1) est creuse et l'extrémité libre (1d) de l'électrode est ouverte, et dans lequel le rayonnement électromagnétique focalisé (F) est émis à travers ladite extrémité libre (1d) ouverte.

10. Installation de protection contre la foudre comportant un paratonnerre et un dispositif d'amorçage, le paratonnerre comprenant une électrode collectrice (1) qui comprend une extrémité libre (1d) permettant de créer un effet de pointe, ledit dispositif d'amorçage comportant une source (2) de rayonnement électromagnétique et des moyens optiques de focalisation (4) permettant de focaliser le rayonnement électromagnétique émis par là source dans un plan de focalisation (P) sur ladite extrémité libre (1d) de l'électrode collectrice (1) ou à proximité immédiate de ladite extrémité libre (1d) de l'électrode collectrice (1), **caractérisé en ce que** la distance (d) entre l'extrémité libre (1d) de l'électrode et le centre (O) du rayonnement électromagnétique (F) dans le plan de focalisation (P) n'excède pas 10cm, et/ou l'intensité (I) du rayonnement électromagnétique dans le plan de focalisation (P) est inférieure à 1000W/cm².

11. Installation selon la revendication 10 dans laquelle la source (2) est un laser continu.

12. Installation selon la revendication 10, dans laquelle la source (2) est un laser pulsé.

13. Installation selon l'une quelconque des revendications 10 à 12, dans laquelle la source (2) permet l'émission d'un rayonnement électromagnétique de longueur d'onde comprise entre 80nm et 900nm.

14. Installation selon la revendication 13, dans laquelle la source (2) permet l'émission d'un rayonnement électromagnétique de longueur d'onde comprise entre 80nm et 450nm.

15. Installation selon l'une quelconque des revendications 10 à 14, dans laquelle la distance (d) entre l'extrémité libre (1d) de l'électrode et le plan de focalisation (P) dans lequel est focalisé te rayonnement électromagnétique (F) est inférieure à 4cm, de préférence inférieure à 2cm, et plus préférentiellement encore inférieure à 0,5cm.

16. Installation selon l'une quelconque des revendications 10 à 15, dans laquelle l'électrode collectrice (1) comporte une partie distale (1c) effilée dont la section transversale décroît jusque l'extrémité libre (1d).

17. Installation selon l'une quelconque des revendications 10 à 16, dans laquelle le rayon de courbure de l'extrémité libre (1 d) de l'électrode (1) est inférieur à 30cm.

18. Installation selon l'une quelconque des revendications 10 à 17, dans laquelle l'électrode (1) est creuse et l'extrémité libre (1d) de l'électrode est ouverte, et dans laquelle la source (2) et les moyen optiques de focalisation (4) permettent l'émission dudit rayonnement électromagnétique focalisé (F) à travers ladite extrémité libre (1d) ouverte.

19. Utilisation de l'installation visée à l'une quelconque des revendications 10 à 18 pour protéger une zone contre les impacts de foudre.

## Patentansprüche

1. **Verfahren zum Schutz vor Blitzeinschlag** mittels eines Blitzableiters, der eine Sammelelektrode (1) enthält, die ein freies Ende (1d) aufweist, mit dem ein Spitzeneffekt bewirkt werden kann, wobei zumindest eine elektromagnetische Strahlung (F) abgegeben wird, die in einer Fokussierungsebene (P) am freien Ende (1d) der Sammelelektrode (1) oder in unmittelbarer Nähe des freien Endes (1d) der Sammelelektrode (1) fokussiert wird, **dadurch gekennzeichnet, dass** der Abstand (d) zwischen dem freien Ende (1d) der Elektrode und dem Zentrum (0) der elektromagnetischen Strahlung (F) in der Fokussierungsebene (P) 10 cm nicht übersteigt und/oder dass die Stärke (I) der elektromagnetischen Strahlung in der Fokussierungsebene (P) geringer als 1000 W/cm² ist.

2. Verfahren nach Anspruch 1, wobei die elektromagnetische Strahlung ein kontinuierlicher Laserstrahl ist.

3. Verfahren nach Anspruch 1, wobei die elektromagnetische Strahlung ein gepulster Laserstrahl ist.

4. Verfahren nach einem der Ansprüche 1 bis 3, wobei die elektromagnetische Strahlung eine Wellenlänge zwischen 80 nm und 900 nm aufweist.

5. Verfahren nach Anspruch 4, wobei die elektromagnetische Strahlung eine Wellenlänge zwischen 80 nm und 450 nm aufweist.

6. Verfahren nach einem der Ansprüche 1 bis 5, wobei der Abstand (d) zwischen dem freien Ende (1d) der Elektrode und der Fokussierungsebene (P), in der die elektromagnetische Strahlung (F) fokussiert wird, geringer als 4 cm ist, vorzugsweise geringer als 2 cm und besonders bevorzugt geringer als 0,5 cm ist.

7. Verfahren nach einem der Ansprüche 1 bis 6, wobei die Sammelelektrode (1) einen spitz zulaufenden, distalen Abschnitt (1c) aufweist, der im Querschnitt zum freien Ende (1d) hin abnimmt.

8. Verfahren nach einem der Ansprüche 1 bis 7, wobei der Krümmungsradius der Elektrode (1) im Bereich ihres freien Endes (1d) geringer als 30 cm ist

9. Verfahren nach einem der Ansprüche 1 bis 8, wobei die Elektrode (1) hohl ausgeführt ist und das freie Ende (1d) der Elektrode offen ist, wobei die fokussierte, elektromagnetische Strahlung (F) durch das offene, freie Ende (1d) hindurch abgegeben wird.

10. **Anlage zum Schutz** vor Blitzeinschlag, enthaltend einen Blitzableiter und eine Zündvorrichtung, wobei der Blitzableiter eine Sammelelektrode (1) enthält, die ein freies Ende (1d) aufweist, mit dem ein Spitzeneffekt bewirkt werden kann, wobei die Zündvorrichtung eine Strahlungsquelle (2) für elektromagnetische Strahlung und optische Fokussierungsmittel (4) aufweist, mit denen die von der Strahlungsquelle abgegebene elektromagnetische Strahlung in einer Fokussierungsebene (P) am freien Ende (1d) der Sammelelektrode (1) oder in unmittelbarer Nähe des freien Endes (1d) der Sammelelektrode (1) fokussierbar ist, **dadurch gekennzeichnet, dass** der Abstand (d) zwischen dem freien Ende (1d) der Elektrode und dem Zentrum (0) der elektromagnetischen Strahlung (F) in der Fokussierungsebene (P) 10 cm nicht übersteigt und/oder dass die Stärke (I) der elektromagnetischen Strahlung in der Fokussierungsebene (P) geringer als 1000 W/cm² ist.

11. Anlage nach Anspruch 10, wobei die Strahlungsquelle (2) ein kontinuierlicher Laser ist

12. Anlage nach Anspruch 10, wobei die Strahlungsquelle ein gepulster Laser ist.

13. Anlage nach einem der Ansprüche 10 bis 12, wobei die Strahlungsquelle (2) das Abgeben einer elektromagnetischen Strahlung mit einer Wellenlänge zwischen 80 nm und 900 nm gestattet.

14. Anlage nach Anspruch 13, wobei die Strahlungsquelle (2) das Abgeben einer elektromagnetischen Strahlung mit einer Wellenlänge zwischen 80 nm und 450 nm gestattet

15. Anlage nach einem der Ansprüche 10 bis 14, wobei der Abstand (d) zwischen dem freien Ende (1d) der Elektrode und der Fokussierungsebene (P), in der die elektromagnetische Strahlung (F) fokussiert wird, geringer als 4 cm ist, vorzugsweise geringer als 2 cm und besonders bevorzugt geringer als 0,5 cm ist.

16. Anlage nach einem der Ansprüche 10 bis 15, wobei die Sammelelektrode (1) einen spitz zulaufenden, distalen Abschnitt (1c) aufweist, der im Querschnitt zum freien Ende (1d) hin abnimmt.

17. Anlage nach einem der Ansprüche 10 bis 16, wobei der Krümmungsradius des freien Endes (1d) der Elektrode (1) geringer als 30 cm ist.

18. Anlage nach einem der Ansprüche 10 bis 17, wobei die Elektrode (1) hohl ausgeführt ist und das freie Ende (1d) der Elektrode offen ist und wobei die Strahlungsquelle (2) und die optischen Fokussierungsmittel (4) das Abgeben der fokussierten, elektromagnetischen Strahlung (F) durch das offene freie Ende (1d) hindurch gestatten.

19. Verwendung der Anlage nach einem der Ansprüche 10 bis 18 zum Schutz eines Bereichs vor Blitzeinschläge.

## Claims

1. Method for protecting against lightning using a lightning rod including a collecting electrode (1), which comprises a free end (1d) making it possible to create a peak effect, in which at least one electromagnetic radiation (F) is emitted that is focused in a focusing plane (P) on said free end (1d) of the collecting electrode (1) or in the immediate vicinity of said free end (1d) of the collecting electrode (1), **characterised in that** the distance (d) between the free end (1d) of the electrode and the center (O) of the electromagnetic radiation (F) in the focusing plane (P) does not exceed 10 cm, and/or the intensity (I) of the electromagnetic radiation in the focusing plane (P) is less than 1000 W/cm².

2. Method according to claim 1, wherein the electromagnetic radiation is a continuous laser beam.

3. Method according to claim 1, wherein the electromagnetic radiation is a pulsed laser beam.

4. Method according to any one of claims 1 to 3, wherein the electromagnetic radiation has a wavelength comprised between 80 nm and 900 nm.

5. Method according to claim 4, wherein the electromagnetic radiation has a wavelength comprised between 80 nm and 450 nm.

6. Method according to any one of claims 1 to 5, wherein the distance (d) between the free end (1d) of the electrode and the focusing plane (P) in which the electromagnetic radiation (F) is focused is smaller than 4 cm, preferably smaller than 2 cm, and still more preferably smaller than 0.5 cm.

7. Method according to any one of claims 1 to 6, wherein the collecting electrode (1) includes a tapered distal part (1c) whereof the transverse section decreases as far as the free end (1 d).

8. Method according to any one of claims 1 to 7, wherein the curve radius of the electrode (1) at its free end (1d) is smaller than 30 cm.

9. Method according to any one of claims 1 to 8, wherein the electrode (1) is hollow and the free end (1d) of the electrode is open, and wherein the focused electromagnetic radiation (F) is emitted through said open free end (1d).

10. Installation for protecting against lightning including a lightning rod and an early streamer emission device, the lightning rod comprising a collecting electrode (1) that comprises a free end (1d) making it possible to create a peak effect, said early streamer emission device including an electromagnetic radiation source (2) and optical focusing means (4) making it possible to focus the electromagnetic radiation emitted by the source in a focusing plane (P) on said free end (1d) of the collecting electrode (1) or in immediate proximity to said free end (1d) of the collecting electrode (1), **characterised in that** the distance (d) between the free end (1d) of the electrode and the center (O) of the electromagnetic radiation (F) in the focusing plane (P) does not exceed 10 cm, and/or the intensity (I) of the electromagnetic radiation in the focusing plane (P) is below 1000 W/cm².

11. Installation according to claim 10, wherein the source (2) is a continuous laser.

12. Installation according to claim 10, wherein the source (2) is a pulsed laser.

13. Installation according to any one of claims 10 to 12, wherein the source (2) makes it possible to emit electromagnetic radiation with a wavelength comprised between 80 nm and 900 nm.

14. Installation according to claim 13, wherein the source (2) makes it possible to emit electromagnetic radiation with a wavelength comprised between 80 nm and 450 nm.

15. Installation according to any one of claims 10 to 14, wherein the distance (d) between the free end (1d) of the electrode and the focusing plane (P) in which the electromagnetic radiation (F) is focused is smaller than 4 cm, preferably smaller than 2 cm, and still more preferably smaller than 0.5 cm.

16. Installation according to any one of claims 10 to 15, wherein the collecting electrode (1) includes a tapered distal part (1c) whereof the transverse section decreases as far as the free end (1 d).

17. Installation according to any one of claims 10 to 16, wherein the curve radius of the free end (1d) of the electrode (1) is smaller than 30 cm.

18. Installation according to any one of claims 10 to 17, wherein the electrode (1) is hollow and the free end (1d) of the electrode is open, and wherein the source (2) and the optical focusing means (4) allow the emission of said focused electromagnetic radiation (F) through said open free end (1d).

19. Use of the installation set out in any one of claims 10 to 18 to protect an area from lightning impacts.
